**Europäisches Patentamt**

**European Patent Office**

**Office européen des brevets**

(19)

(11) Veröffentlichungsnummer: **0 140 147**
**A1**

(12)

# EUROPÄISCHE PATENTANMELDUNG

(21) Anmeldenummer: **84111312.9**

(22) Anmeldetag: **21.09.84**

(51) Int. Cl.⁴: **B 29 C 37/00**

(30) Priorität: **07.10.83 DE 3336562**

(43) Veröffentlichungstag der Anmeldung:
**08.05.85 Patentblatt 85/19**

(84) Benannte Vertragsstaaten:
**AT BE CH DE FR GB IT LI NL SE**

(71) Anmelder: **Karl Marbach GmbH + Co.**
**August-Häuser-Strasse 6**
**D-7100 Heilbronn(DE)**

(72) Erfinder: **Marbach, Karl G. Ing. grad.**
**Silcherstrasse 28**
**D-7102 Weinsberg(DE)**

(74) Vertreter: **Dreiss, Hosenthien & Fuhlendorf**
**Gerokstrasse 6**
**D-7000 Stuttgart 1(DE)**

(54) **Vorrichtung zum Schneiden von Schaumstoff.**

(57) Bei einer Vorrichtung zum Schneiden von Schaumstoff, bei der über Kreismesser (15) Schaumstofflagen (5) in Streifen (7) geschnitten werden, wird zur Erzielung von Schaumstoffschnitzeln mit etwa rhombischem Querschnitt vorgeschlagen, die Streifen (7) über eine Transportvorrichtung (8) direkt einer Schnitzelvorrichtung (9) zuzuführen, die ein Schneidmesser (24) aufweist, durch das jeweils ein Schnitt etwa parallel zu einer Messerwelle (14) aber in einem Winkel zur Längserstreckung der Streifen (7) gerichtet, entlang einer Schneidkante (20) erfolgt.

./...

Fig. 1

- 1 -

Beschreibung

Die Erfindung betrifft eine Vorrichtung zum Schneiden von Schaumstoff mit auf einer Messerwelle parallel und im Abstand angeordneten Kreismessern, denen über eine Transportvorrichtung eine Schaumstofflage zum Schneiden in Streifen zuführbar ist, wobei die Transportvorrichtung zur Führung der Schaumstofflage und der daraus geschnittenen Streifen über mindestens zwei Umlenkwellen endlos umlaufende Transportriemen aufweist, die zwischen den Kreismessern hindurchgeführt sind.

Eine solche aus der DE-AS 26 24 192 bekannte Vorrichtung dient zum Schneiden von Schaumstoffstreifen von einer dem Abstand der Kreismesser entsprechenden Breite.

Aus der GB-PS 826 103 ist eine Trennvorrichtung zum Abschälen der erforderlichen Schaumstofflagen von einem Schaumstoffblock bekannt. Auch die dort verwendete Transportvorrichtung weist umlaufende im Abstand parallel verlaufende Transportriemen auf.

2711 068

Zum Abtrennen der Schaumstofflagen dient ein in einem Spaltkeil geführtes Trennmesser.

Aus der DE-AS 26 02 706 sind schließlich noch aus Kunststoff-Weichschaum bestehende stabförmige Körper mit Rhombenquerschnitt bekannt, die besonders gut als Füllgut für Polster, Kissen od.dgl. geeignet sind. Durch die spezielle Formgebung des Stabquerschnitts als Parallelogramm oder Rhombuid verhalten sich diese Schaumstoffkörper bei Kissenfüllungen ähnlich wie Daunenfedern. Diese Körper haben eine bevorzugte Abmessung von etwa 30 mm Länge, 8 mm Breite und 3 mm Höhe.

Aufgabe der vorliegenden Erfindung ist es nun die eingangs beschriebene Vorrichtung zur rationellen Herstellung solcher Körper aus Kunststoff-Weichschaum insbesondere Polyäther umzugestalten.

Zur Lösung dieser Aufgabe sieht die Erfindung vor, daß die Streifen durch die Transportvorrichtung direkt einer Schnitzelvorrichtung mit mindestens einem Schneidmesser zugeführt werden, durch das jeweils ein Schnitt etwa parallel zur Messerwelle aber in einem Winkel zur Längserstreckung der Streifen gerichtet entlang einer am Ende der Führung vorgesehenen Schneidkante erfolgt.

Zweckmäßigerweise wird ein in einer Schlag- oder Scherbewegung schneidendes Messer für die Schnitzelvorrichtung verwendet. Dazu ist das Schneidmesser vorteilhaft auf einer Schneidmesserwelle angeordnet, die parallel zur Messerwelle des Kreismessers verläuft, wobei die Schneidkante mit Abstand unterhalb der Verbindungsebene der beiden Mittelachsen der Wellen an der Umlaufbahn des Schneidmessers angeordnet ist. Hierdurch wird beim Schnitzeln die gewünschte etwa parallelogramm- oder rautenartige Querschnittsform erreicht. Der entsprechende Rautenwinkel wird durch die Wahl des Durchmessers der Umlaufbahn und die Tiefenversetzung der Schneidkante gegenüber der Mittelachse der Schneidmesserwelle bestimmt. Sie beträgt vorzugsweise ca. 45°. Die Länge der Schaumstoffkörper entspricht dabei dann der Breite der Streifen bzw. dem Abstand der Kreismesser auf der Messerwelle.

2711 068

Konstruktiv besonders einfach kann mindestens ein Schneidmesser ähnlich einem Hobelmesser austauschbar an der Schneidmesserwelle befestigt sein, zur Erzielung eines guten Rundlaufs, vorzugsweise werden symmetrisch wenigstens zwei Messer vorgesehen sein. Es ist aber auch ein Schneidmesser mit einer wendelförmigen Schneide denkbar, die einen ziehenden Schnitt bewirkt. Der Schneidvorgang verteilt sich dadurch zeitlich über die gesamte Schneidbreite, so daß eine höhere Laufruhe ohne markanten Schnittschlag erreicht wird. Allerdings ist hier das Schärfen des Schneidmessers etwas aufwendiger.

Zum Abtransport der abgeschnittenen stabförmigen Schaumstoffkörper kann besonders vorteilhaft das bzw. die Schneidmesser an den Enden jeweils mindestens eines mit der Schneidmesserwelle verbundenen Gebläseflügels vorgesehen sein oder durch die gegebenenfalls abgewinkelten Enden derselben selbst gebildet sein. Der Abtransport kann gegebenenfalls noch durch eine zusätzliche Absaugung erfolgen. Hierzu ist die Schneidmesserwelle mit dem bzw. den Schneidmessern von einem Sammelgehäuse umschlossen, das mit einem Schnitzelabführkanal verbunden ist. Es kann dann dieser Kanal gegebenenfalls mit der Absaugvorrichtung in Verbindung stehen. Zur Vermeidung eines Rückstaus kann das Sammelgehäuse über einen trichterförmig sich verengenden Übergang in den Schnitzelabführkanal übergehen.

Eine besonders gute Zuführung der geschnittenen Streifen zur Schnitzelvorrichtung kann dadurch erreicht werden, daß die Transportriemen über drei um die Messerwelle herum angeordnete Umlenkwellen herumgeführt sind und daß eine der Umlenkwellen nahe der Schneidkante parallel zu dieser angeordnet ist und daß diese Umlenkwelle gegenüber den anderen Umlenkwellen einen wesentlich kleineren Abrolldurchmesser für die Transportriemen aufweist. Sie kann dann besonders nahe an der Schneidkante angeordnet werden.

Zur besonders rationellen Herstellung kann in weiterer Ausbildung der Erfindung eine zusätzliche Trennvorrichtung vorgesehen sein, durch die die Schaumstofflagen von einem Schaumstoffblock oder -zylinder abtrennbar und der Transportvorrichtung zuführbar sind.

Diese zusätzliche Trennvorrichtung besteht aus einem Trennmesser und einem Spaltkeil, wobei der Spaltkeil zugleich Teil der Transportvorrichtung sein kann, wobei dann zum si cheren Transport über dem Spaltkeil die Transportriemen zum Abtransport der Schaumstofflagen zur Schnitzeleinrichtung vorbeigeführt sind.

Zum störungsfreien Transport der Streifen ist in vorteilhafter Weise der Spaltkeil über eine Führungsfläche mit der Schneidkante verbunden, wobei parallel zur Führungsfläche jeweils ein Riementrumm der Transportriemen verläuft. Durch ein Luftpolster kann die Gleitreibung wesentlich verringert werden.

Zweckmäßigerweise sind die Trennvorrichtung, die Transportvorrichtung und die Schnitzelvorrichtung als Baueinheit zusammengefaßt, wobei diese Baueinheit relativ zum Schaumstoffblock oder -zylinder bewegbar ist, um eine Schicht vom Schaumstoffblock oder eine kontinuierliche Abschälung von einem Schaumstoffzylinder zu erreichen. Zweckmäßigerweise kann die Baueinheit höhenveränderbar angeordnet und der Schaumstoffblock über einen Tisch horizontal unter der Baueinheit hin- und herverschiebbar sein. Durch schrittweise Höhenverstellung entsprechend der gewünschten Dicke der Schaumstofflage können dann entsprechende Schaumstofflagen abgeschnitten und gleich zu Schnitzeln verarbeitet werden. Ein kontinuierliches Abschälen und Verarbeiten einer Schaumstofflage von einem Schaumstoffzylinder ähnlich dem Furnierschälen kann dann erfolgen, wenn der Schaumstoffzylinder drehbar auf einem Gestell gehalten und relativ zur Baueinheit verschiebbar ist.

Weitere erfindungsgemäße Ausbildungen sind den Unteransprüchen zu entnehmen und werden mit ihren Vorteilen in der nachstehenden Beschreibung näher erläutert. In den beigefügten Zeichnungen zeigt:

Figur 1          eine Schrägansicht einer Vorrichtung unter Weglassung der Transportvorrichtung,

Figur 2          einen schematisierten Teilquerschnitt der in Fig. 1 dargestellten Vorrichtung mit der Transportvorrichtung und

- 8 -

| Figur 3 | einen Querschnitt durch einen durch die dargestellte Vorrichtung hergestellten Schaumstoffkörper in großem Maßstab. |

Auf einem in horizontaler Richtung 1 hin- und herverschiebbaren Tisch 2 liegt ein Schaumstoffblock 3, von dem über eine Trennvorrichtung 4 bei jeder Hin- und Herbewegung eine Schaumstofflage 5 mittels eines umlaufenden Trennmessers 6 abgetrennt und nach einem Schneiden in Streifen 7 über eine Transportvorrichtung 8 einer Schnitzelvorrichtung 9 zuführbar ist, durch die die Streifen 7 zu Schaumstoffkörpern 10 geschnitzelt werden.

Das schneidende Trumm des Trennmessers 6 ist vor einem Spaltkeil 11 angeordnet, während das rücklaufende Trumm unter dem Spaltkeil 11 aber über dem Schaumstoffblock 3 über Rollen 12, 12' zurückgeführt ist. Die Rollen selbst sind in nicht näher dargestellter Weise zusammen mit ihrem Antrieb an Endplatten 13 gehalten, an denen auch die Enden des Spaltkeils 11 befestigt sind.

Über dem Spaltkeil 11 ist zum Schneiden der Streifen 7 eine Messerwelle 14 vorgesehen, die im der Streifenbreite entsprechenden Abstand Kreismesser 15 trägt. Die Schaumstofflage 5 wird vom unteren Teil der Kreismesser 15 geschnitten. Dazu durchdringen diese die Schaumstofflage 5 und ragen auch noch in entsprechenden Ausnehmungen 16 in den Spaltkeil 11 hinein. Während dieses Trennvorgangs gleitet die Schaumstofflage 5 und die daraus geschnittenen Streifen 7 auf einer Führungsfläche 17 des Spaltkeils 11. Um hier einen sicheren Transport zu erreichen, sind um die Messerwelle 14 herum drei Umlenkwellen 18, 18', 18" vorgesehen, über die endlose Transportriemen 19 herumgeführt sind. Das zwischen den Wellen 18 und 18' verlaufende Trumm verläuft parallel zur Führungsfläche 17 und liegt auf der Schaumstoffauflage 5 auf und gewährleistet so einen sicheren Transport zur Schnitzeleinrichtung 9. Die Transportriemen 19 können auch nur um die Wellen 14 und 18 geführt sein.

Die Führungsfläche 17 endet gegen die Schnitzeleinrichtung 9 hin in einer Schneidkante 20, die parallel zur Mittelachse 21 der Messerwelle 14 verläuft. Die Schnitzelvorrichtung 9 selbst weist ebenfalls eine Schneidmesserwelle 22 auf, deren
Mittelachse 23 ebenfalls parallel zur Mittelachse
21 der Messerwelle 14 verläuft. Die Schneidmesserwelle 22 trägt am Umfang verteilt zwei Schneidmesser 24, deren Umlaufbahn 25 an der Schneidkante
20 vorbeiführt.

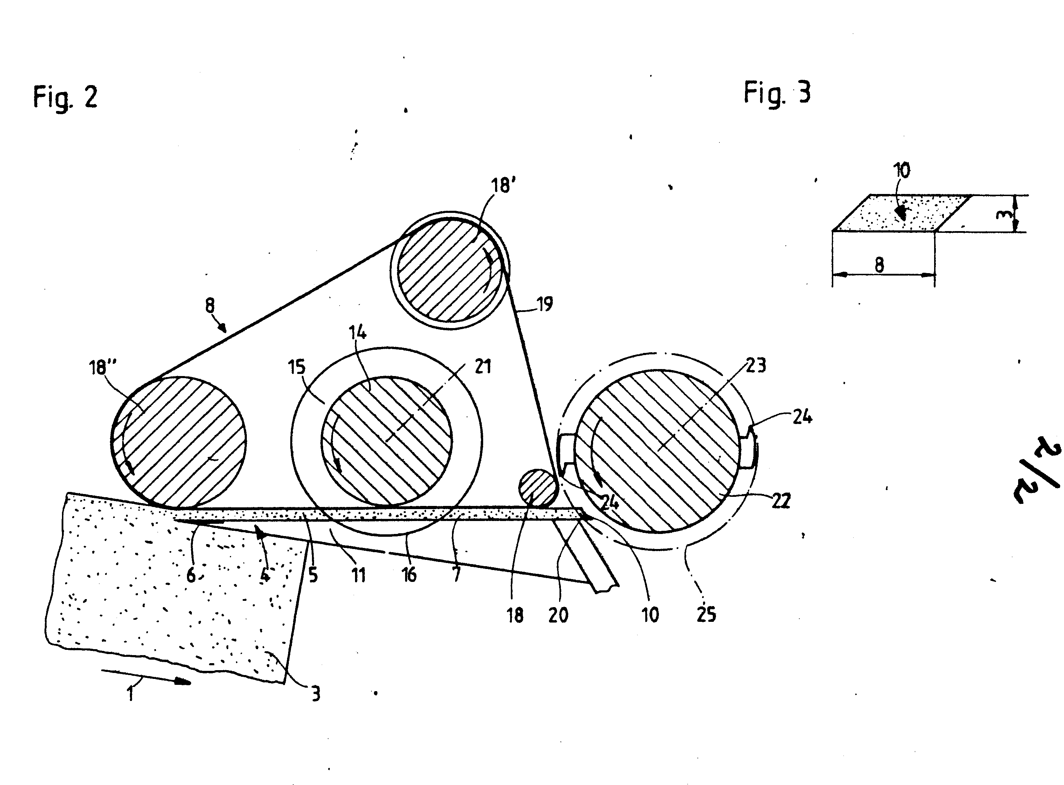

Die Schneidmesserwelle 23 ist über der Führungsfläche 12 und der Schneidkante 20 angeordnet, so
daß die Streifen 7 in einem Winkel zu ihrer Längserstreckung abgeschnitten werden. Die abgeschnittenen
Schaumstoffkörper 10 sind stabartig und haben
dadurch etwa den Querschnitt einer Raute oder
eines Parallelogramms, wie dies in Fig. 3 dargestellt
ist, wobei die Breite etwa 8 mm, die Höhe 3 mm und
die Länge entsprechend dem Abstand der Kreismesser
15 etwa 30 mm beträgt. Form und Verwendungszweck
der erfindungsgemäßen Vorri chtung hergestellten   .
Schaumstoffkörper 10 ist ausführlich in der DE-AS
26 02 706 beschrieben. Sie dienen vorzugsweise
zur Füllung von Polstern, Kissen, Decken und dgl.

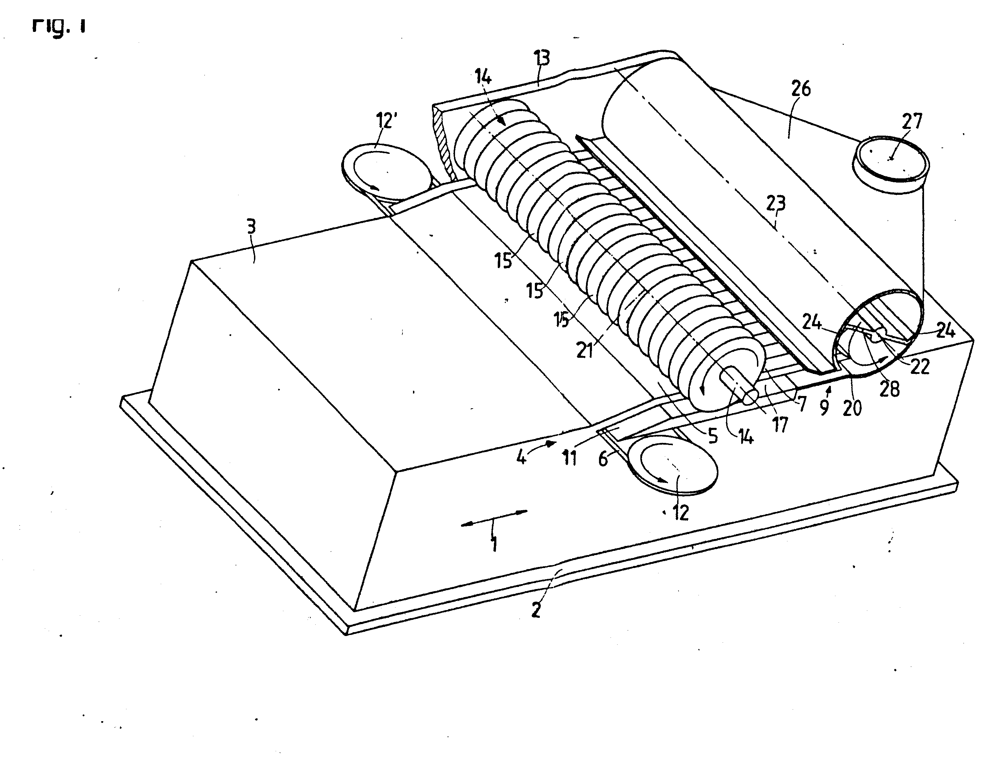

Zur Ermöglichung einer hohen Produktionsgeschwindigkeit ist die Schneidmesserwelle 22 von einem Sammelgehäuse 26 umschlossen, das sich verjüngend in einem Schnitzelabführkanal 27 mündet. Dieser selbst kann zur Absaugung der Körper 10 mit einer Absaugvorrichtung verbunden sein. Zusätzlich oder anstatt dessen kann auch wie in Fig. 1 dargestellt, die Schneidmesserwelle 22 als Gebläseflügel 28 mit an deren Enden angeordneten Schneidmessern 24 ausgebildet sein, so daß die abgeschnittenen Körper 10 nach dem Schnitt sofort abtransportiert werden, beispielsweise durch Absaugrohre.

In den Figuren nur andeutungsweise dargestellt sind alle Wellen 14, 18, 18', 18", 22 und der Spaltkeil 11 zwischen zwei Endplatten 13 angeordnet und es wird so eine die Trennvorrichtung 4, die Transportvorrichtung 8 und die Schnitzeleinrichtung 9 beinhaltende Baueinheit gebildet, die einfach gehandhabt werden kann. Beispielsweise kann sie zum stufenweisen Abschneiden der Schaumstofflagen 5 bei jeder Hin- und Herbewegung schrittweise gegen den Tisch 2 hin nach unten abgesenkt werden bis der ganze Schaumstoffblock 3 aufgearbeitet ist. Analog kann natürlich auch der Tisch 2 entsprechend angehoben und die Baueinheit

- 12 -

feststehend ausgebildet sein. Zur Erzielung
einer entsprechenden Höhe der Körper 10 ist das
Übersetzungsverhältnis des Antriebs der Transportvorrichtung 8 und der Schneidmesserwelle 22 entsprechend gewählt und es können alle Wellen 14, 18',
18", 22 mit entsprechenden Übersetzungen und auch
die Rollen 12 der Trennvorrichtung 4 mit einem
einzigen Antrieb angetrieben werden.

- Ende der Beschreibung -

2711 068

HANS LANGOSCH
Dipl.-Ing. (1963 - 1981)
UWE DREISS
Dr. jur., Dipl.-Ing., M. Sc.
HEINZ HOSENTHIEN
Dr.-Ing., Dipl.-Ing.
JÖRN FUHLENDORF
Dipl.-Ing.

PATENTANWÄLTE
Beim Europäischen Patentamt zugelassene Vertreter
European Patent Attorneys

D-7000 STUTTGART 1
GEROKSTRASSE 6
Tr (0711) 24 57 34/44
TG IDPA
TX 7 22 247 idea d

0140147

P für Besucher

┌ ¬
DREISS, HOSENTHIEN & FUHLENDORF, D-7000 STUTTGART 1

## Anmelder:

Karl Marbach GmbH + Co.

August-Häußer-Str. 6

D-7100 Heilbronn

L ┘

| Amtl. Akt. Z. Off. Ser. No. | Ihr Zeichen Your Ref. | Unser Zeichen Our Ref. | Datum Date |
|---|---|---|---|
| | | 2711 068 | 4.10.1983 H/W |

Titel: Vorrichtung zum Schneiden von Schaumstoff

## Ansprüche

1. Vorrichtung zum Schneiden von Schaumstoff mit auf einer Messerwelle (14) parallel und im Abstand angeordneten Kreismessern (15), denen über eine Transportvorrichtung (8) eine Schaumstofflage (5) zum Schneiden in Streifen (7) zugeführt wird, wobei die Transportvorrichtung (8) zur Führung der Schaumstofflage (5) und der daraus geschnittenen Streifen (7) über mindestens zwei Umlenkwellen (18) endlos umlaufende Transportriemen (19) aufweist, die zwischen den Kreismessern (15) hindurchgeführt sind, dadurch gekennzeichnet, daß die Streifen (7)

Postscheckkonto Stuttgart 507 71-705 (BLZ 600 100 70) · Dresdner Bank Stuttgart 1919 854 (BLZ 600 800 00)

durch die Transportvorrichtung (8) direkt einer
Schnitzelvorrichtung (9) mit mindestens einem
Schneidmesser (24) zugeführt werden, durch das
jeweils ein Schnitt etwa parallel zur Messerwelle
(14) aber in einem Winkel zur Längserstreckung
der Streifen (7) gerichtet entlang einer am Ende
der Führungsfläche (17) vorgesehenen Schneidkante
(20) erfolgt.

2. Vorrichtung nach Anspruch 1, dadurch gekennzeichnet,
daß das Schneidmesser (24) auf einer Schneidmesserwelle (22) angeordnet ist, die parallel zur die
Kreismesser (15) tragenden Messerwelle (14) verläuft, wobei die Schneidkante (20) mit Abstand
unterhalb der Verbindungsebene der beiden Mittelachsen (21) und (23) der Wellen (14, 22) an der
Umlaufbahn (25) des Schneidmessers (24) angeordnet
ist.

3. Vorrichtung nach Anspruch 1 oder 2, dadurch
gekennzeichnet, daß mindestens ein Schneidmesser
(24) ähnlich einem Hobelmesser austauschbar an
der Schneidmesserwelle (22) befestigt ist.

2711 068

- 3 -

4. Vorrichtung nach Anspruch 1 oder 2, dadurch gekennzeichnet, daß das Schneidmesser (24) eine wendelförmige Schneide aufweist.

5. Vorrichtung nach einem der Ansprüche 1 bis 4, dadurch gekennzeichnet, daß das bzw. die Schneidmesser (24) an den Enden jeweils mindestens eines mit der Schneidmesserwelle (22) verbundenen Gebläseflügels (28) vorgesehen sind oder durch die gegebenenfalls abgewinkelten Enden derselben selbst gebildet sind.

6. Vorrichtung nach einem der Ansprüche 1 bis 5, dadurch gekennzeichnet, daß die Schneidmesserwelle (22) mit dem bzw. den Schneidmessern (24) von einem Sammelgehäuse (26) umschlossen ist, das mit einem Schnitzelabführkanal (27) verbunden ist.

7. Vorrichtung nach Anspruch 6, dadurch gekennzeichnet, daß das Sammelgehäuse (26) über einen trichterförmig sich verengenden Übergang in den Schnitzelabführkanal (27) übergeht.

8. Vorrichtung nach einem der Ansprüche 1 bis 7, dadurch gekennzeichnet, daß die Transportriemen (19) über drei um die Messerwelle (14) herum angeordnete Umlenkwellen (18 ,18', 18") herumgeführt sind und daß eine der Umlenkwellen (18) nahe der Schneidkante (20) parallel zu dieser angeordnet ist und daß diese Umlenkwelle (18) gegenüber den anderen Umlenkwellen (18', 18") einen wesentlich kleineren Abrolldurchmesser für die Transportriemen (19) aufweist.

9. Vorrichtung nach einem der Ansprüche 1 bis 8, dadurch gekennzeichnet, daß eine zusätzliche Trennvorrichtung (4) vorgesehen ist, durch die die Schaumstofflage (5) von einem Schaumstoffblock (3) oder -zylinder abtrennbar und der Transportvorrichtung (8) züführbar ist.

10. Vorrichtung nach Anspruch 9, dadurch gekennzeichnet, daß die zusätzliche Trennvorrichtung (4) in an sich bekannter Weise ein Trennmesser (6) und einen Spaltkeil (11) aufweist, wobei der Spaltkeil (11) zugleich Teil der Transportvorrichtung (8) ist und über dem Spaltkeil (11) die Transportriemen (19) zum Transport der Schaumstofflage (5) vorbeigeführt sind.


11. Vorrichtung nach Anspruch 10, dadurch gekennzeichnet, daß der Spaltkeil (11) über eine
Führungsfläche (17) mit der Schneidkante (20)
verbunden ist und daß parallel zur Führungsfläche (17) jeweils ein Riementrumm der Transportriemen (19) verläuft.


12. Vorrichtung nach Anspruch 10, dadurch gekennzeichnet, daß das Trennmesser (6) bandsägenartig
endlos um mindestens zwei Rollen (12, 12')
umlaufend ausgebildet ist, wobei ein Trumm des
Trennmessers (6) vor der Kante des Spaltkeils
(11) vorbeigeführt ist bzw. die Vorderkante des
Spaltkeils (11) bildet.


13. Vorrichtung nach einem der Ansprüche 1 bis 12,
dadurch gekennzeichnet, daß die Trennvorrichtung
(4), die Transportvorrichtung (8) und die
Schnitzelvorrichtung (9) als Baueinheit ausgebildet sind und diese Baueinheit relativ zum
Schaumstoffblock (3) oder -zylinder bewegbar ist,
um eine Schicht vom Schaumstoffblock (3) oder eine kontinuierliche Abschälung vom Schaumstoffzylinder zu ermöglichen.

14. Vorrichtung nach Anspruch 13, dadurch gekennzeichnet, daß die Baueinheit höhenveränderbar
angeordnet ist und der Schaumstoffblock (3)
über einen Tisch (2) horizontal unter der Baueinheit
hin- und herverschiebbar ist.

15. Vorrichtung nach Anspruch 13, dadurch gekennzeichnet, daß der Schaumstoffzylinder in einem
Gestell drehbar gehalten und relativ zur Baueinheit verschiebbar ist.

16. Vorrichtung nach einem der Ansprüche 1 bis 15,
dadurch gekennzeichnet, daß die Schnitzelvorrichtung (9) mit dem Sammelgehäuse (26), die
Transportvorrichtung (8) mit den Wellen (18)
und die Trennvorrichtung (4) zwischen zwei
Endplatten (13) angeordnet sind, die entsprechende
Lager für die Wellen (14, 18, 22) aufweisen
und die erforderlichen Antriebe und Übersetzungen
tragen.

17. Vorrichtung nach Anspruch 10, dadurch gekennzeichnet, daß der Spaltkeil (11) bzw. dessen
anschließende Führungsfläche (17) als Gegenlager
für die Kreismesser (15) dient und entsprechende
Ausnehmungen (16) für das teilweise Eintauchen
der Kreismesser (15) aufweist.

- Ende der Ansprüche -

Fig. 1

Fig. 2                                    Fig. 3

2/2

0140147

**EUROPÄISCHER RECHERCHENBERICHT**

Europäisches
Patentamt

| EINSCHLÄGIGE DOKUMENTE | | | EP 84111312.9 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | <u>AU - A - 61 835</u> (CALMEC EXTRUFORM) <br> * Gesamt * <br> -- | 1,2,4 | B 29 C 37/00 |
| A | <u>CH - A - 470 248</u> (HORAI TEKKO SHO) <br> * Gesamt * <br> -- | 1,2,6 | |
| A | <u>DE - A - 2 160 456</u> (AUTOMATIK) <br> * Gesamt * <br> -- | 1,2,4, 6,8 | |
| A | <u>US - A - 2 812 815</u> (QUINSEY) <br> * Gesamt * <br> -- | 1,2,3, 6 | |
| A | <u>US - A - 2 776 711</u> (BAS) <br> * Gesamt * <br> -- | 1,2,4 | |

| | | | RECHERCHIERTE SACHGEBIETE (Int. Cl.4) |
|---|---|---|---|
| A | <u>FR - A - 1 471 513</u> (KRAUSS UND <u>REICHERT</u>) <br> * Gesamt * <br> -- | 9-12 | B 29 C |
| A,D | <u>GB - A - 826 103</u> (TURNER) <br> * Gesamt * <br> ---- | 9-12 | |

Der vorliegende Recherchenbericht wurde für alle Patentansprüche erstellt.

| Recherchenort | Abschlußdatum der Recherche | Prüfer |
|---|---|---|
| WIEN | 28-01-1985 | REININGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82